# FASCICULE DE BREVET EUROPEEN

(11) **EP 3 111 883 B1**
(45) Date de publication et mention de la délivrance du brevet: **02.09.2020**
(21) Numéro de dépôt: 16176883.3
(22) Date de dépôt: 29.06.2016
(51) Int. Cl.: A61C 13/00, A61C 19/04, G01J 3/02, G01J 3/51

(54) **PROCEDE DE REALISATION ET DE CONTROLE DE CONFORMITE D'UNE PROTHESE DENTAIRE A PARTIR DE PARAMETRES OBTENUS AVEC UN DISPOSITIF DE PRISE DE TEINTE**
VERFAHREN ZUR HERSTELLUNG UND KONFORMITÄTSKONTROLLE EINER ZAHNPROTHESE ANHAND VON PARAMETERN, DIE MIT EINER FARBNAHMEVORRICHTUNG ERHALTEN WURDEN
METHOD FOR MANUFACTURING AND TESTING THE CONFORMITY OF A DENTAL PROSTHESIS USING PARAMETERS OBTAINED VIA A COLOUR CAPTURING DEVICE

(30) Priorité: 30.06.2015 FR 1556141
(43) Date de publication de la demande: 04.01.2017
(73) Titulaire: TCM, 87068 Limoges (FR)
(72) Inventeur: ROUGIER, Frédérik, 87140 THOURON (FR); GUILLOT, Julien, 87000 LIMOGES (FR)
(74) Mandataire: Aquinov

(56) Documents cités:
- WO-A1-99/01746
- US-A1- 2007 212 667

## Description

La présente invention concerne un procédé de réalisation et de contrôle de conformité d'une prothèse dentaire à partir d'une prise de paramètres en bouche avec un dispositif de prise de teinte.

On sait que les fabrications de prothèses dentaires sont effectuées par des prothésistes qui ne sont pas nécessairement à proximité du praticien dentaire voire sont fabriquées dans des unités à vocation industrielle dans des pays fortement éloignés géographiquement du lieu de pose mais dont les coûts de main d'œuvre sont inférieurs.

La prothèse ainsi fabriquée à distance, est envoyée par une messagerie au praticien dentaire et il apparaît nécessaire de livrer une prothèse qui, non seulement est adaptée dimensionnellement, ceci n'étant pas l'objet de la présente invention, mais aussi parfaitement adaptée esthétiquement. C'est en effet l'essentiel pour une prothèse : être naturelle au point qu'elle ne se voit pas et s'intègre parfaitement. La teinte au sens large est donc primordiale et les renseignements complémentaires permettent d'atteindre un résultat optimisé.

C'est là que les problèmes se posent car il faut pouvoir déterminer des paramètres non pas de façon uniquement subjective mais aussi à travers des mesures réelles, reproductibles, vérifiables.

Ensuite, une fois ces paramètres déterminés, il faut pouvoir vérifier que la prothèse est conforme à ces paramètres une fois fabriquée, afin de ne pas livrer une prothèse qui ne conviendrait pas. Une malfaçon engendre des coûts importants car il faut :
- constater le défaut en bouche, ce qui a un coût et nécessite un déplacement inutile du client et un travail inutile du praticien,
- refaire une nouvelle prothèse avec un délai et un coût,
- acheminer ladite nouvelle prothèse avec un délai également et un coût,
- déplacer de nouveau le client, et
- travailler pour la pause de la nouvelle prothèse, ce qui nécessite du temps donc un coût,
sans compter le temps passé pour les échanges d'informations et l'impact qualité et d'image pour le praticien.

Il est impératif de pouvoir assurer un contrôle qualité en amont de la pose, dès la fabrication avec une certitude pour le praticien de recevoir une prothèse prête à poser, conforme aux paramètres établis lors de la prise de teinte.

La première difficulté est justement la prise de teinte. On entend par teinte dentaire un ensemble de caractéristiques de la dent qui visent à traduire de manière la plus fidèle possible l'apparence de la dent. La teinte dentaire correspond ainsi à la couleur de la dent, c'est-à-dire luminosité, saturation, teinte mais peut aussi incorporer tout paramètre qui a un effet sur l'apparence de la dent tel que sa translucidité ou sa transparence, ou encore son état de surface.

Lorsqu'on réalise une prothèse dentaire, il faut que cette prothèse reprenne les mêmes couleurs que les dents voisines ou le plus proche possible afin de passer inaperçue dans la bouche du patient.

Selon une technique connue, l'évaluation de la teinte d'une dent peut être faite visuellement par un dentiste. Le dentiste réalise la prise de teinte pour la réalisation de la prothèse dentaire en comparant la dent du patient et des dents de référence d'un nuancier. Les teintes ainsi déterminées, sont ensuite fournies à un prothésiste pour permettre à ce dernier de choisir les mélanges de pâtes servant à la fabrication de la prothèse correspondante. Cette technique de mesure est peu fiable. L'appréciation des teintes d'une dent est subjective et peut varier d'un praticien à l'autre en raison du mécanisme de perception de l'œil. Cette mesure est en outre influencée par des facteurs environnementaux tels par exemple les conditions d'éclairement.

US2007/0212667 divulgue une méthode et un système de fabrication de restorations dentaires. J Z

Pour s'affranchir des erreurs de perception du praticien, une évaluation plus objective peut être réalisée en utilisant un dispositif d'analyse spectrale d'une dent soumise à un faisceau de lumière. Un tel dispositif comprend une poignée et une tête de mesure venant en contact de la dent à mesurer, la tête de mesure étant reliée aux moyens d'émission-réception par un faisceau de fibres optiques. La poignée comprend une source de lumière telle des diodes électroluminescentes (LEDs) et la tête de mesure comprend des capteurs de lumière. Toutefois ce dispositif permet de réaliser uniquement des mesures ponctuelles sur la dent.

Selon une autre forme de réalisation, il est également possible d'utiliser un dispositif d'imagerie permettant de réaliser une cartographie de la dent. L'image prise est ensuite soumise à des traitements d'image tels que la segmentation automatique afin de déterminer un ensemble de caractéristiques de la dent. Un tel dispositif de prise de vue comprend une tête de mesure et une poignée. La tête comprend au moins un capteur d'image, un système optique et un système d'éclairage à LEDs destiné à éclairer la zone de prise de vue. Bien qu'il permette de réaliser une mesure bidimensionnelle, ce dispositif présente une tête de mesure relativement encombrante.

Un autre inconvénient de ces dispositifs connus est lié au fait que la tête de mesure reste fixe par rapport à la poignée. De ce fait l'usage de ces dispositifs est limité à une partie avant de l'arcade dentaire du patient.

Aussi, même si les dispositifs de l'art antérieur peuvent être utilisés pour la mise en œuvre du procédé selon l'invention, le dispositif décrit ci-après pour la mise en œuvre du procédé selon la présente invention permet d'atteindre un meilleur résultat. Ce dispositif vise à remédier aux inconvénients de l'art antérieur, en proposant un dispositif avec une tête de mesure très compacte qui permet de réaliser une analyse bidimensionnelle tout en ayant accès à toutes les dents de la bouche. Le procédé de réalisation et de contrôle est d'autant optimisé.

A cet effet, l'appareil de mesure de teinte dentaire comprend un boîtier, une poignée et une tête de mesure, et ladite tête de mesure comprend :
- un corps creux s'étendant selon un axe longitudinal, ledit corps creux comprenant une extrémité proximale, une extrémité distale coudée par rapport à l'axe longitudinal, ladite extrémité distale étant munie d'un embout amovible destiné à venir en contact avec une surface d'analyse d'une dent ;
- au moins une source lumineuse et des moyens d'acquisition d'images solidaires du corps creux, ledit corps creux étant apte à transmettre la lumière de ladite source lumineuse depuis l'extrémité proximale jusqu'à l'extrémité distale ;
et en ce que ledit appareil comprend un ensemble d'orientation permettant de monter l'extrémité proximale du corps creux dans le boîtier de façon à ce que la tête de mesure occupe différentes positions angulaires par rapport au boîtier.

Selon un mode de réalisation de l'appareil, l'ensemble d'orientation comprend au moins une première demi-coque apte à être assemblée à une seconde demi-coque pour former une coque creuse délimitant une cavité configurée pour recevoir ladite extrémité proximale, ladite cavité comportant sur sa surface intérieure une surface faisant radialement en saillie destinée à venir coopérer avec une pluralité de logements ayant une forme complémentaire formés sur la surface extérieure de l'extrémité proximale pour assurer les différentes positions angulaires de la tête de mesure par rapport au boîtier.

Avantageusement, l'ensemble d'orientation comprend un moyen de verrouillage pour bloquer la tête de mesure dans une position angulaire définie par rapport au boîtier.

On comprend dès lors que la prise de teinte en focalisant sur la dent du patient et en limitant les interactions des dents voisines, s'affranchit de l'impact de tout l'environnement de la dent concernée.

Ainsi comme la prise de teinte est bien focalisée grâce au dispositif et comme cette prise de teinte s'affranchit de l'environnement, les paramètres mesurés et transmis au prothésiste et/ou au centre de fabrication seront parfaitement adaptés pour permettre ultérieurement un contrôle satisfaisant puisque la prothèse sur le lieu de fabrication n'est justement pas dans son environnement.

D'autres caractéristiques et avantages du procédé selon la présente invention ressortiront de la description suivante de modes particuliers de réalisation, donnés à titre d'exemples non limitatifs, ainsi que de la description du dispositif utilisé, ceci en référence aux dessins annexés, sur lesquels :
- la figure 1 est une vue schématique en perspective d'un appareil de prise de teinte selon un mode de réalisation;
- la figure 2 est une vue éclatée en perspective de la tête de mesure de l'appareil de la figure 1 ;
- la figure 3 est une vue de dessous en coupe du boîtier de l'appareil de la figure 1;
- la figure 4A est une vue en perspective du guide optique de la tête de mesure et
- la figure 4B est une vue en perspective du guide optique muni d'un surmoulage;
- la figure 5A illustre une vue en perspective de l'extrémité distale coudée du corps creux, le bout de l'extrémité distale étant équipé de moyens d'acquisition d'image,
- la figure 5B illustre une vue en perspective de l'embout de la tête de mesure;
- la figure 5C illustre une vue en perspective de l'embout fixé sur le bout de l'extrémité distale coudée du corps creux;
- la figure 6 est une vue de la tête de mesure de la figure 2 dans une configuration assemblée;
- la figure 7 est une vue en coupe de l'extrémité proximale de la tête de mesure maintenue entre deux demi-coques de l'ensemble d'orientation de l'appareil,
- la figure 8 montre un synoptique du procédé de fabrication et de contrôle selon la présente invention, dans le cas simple d'un praticien et d'un prothésiste, et
- la figure 9 représente un synoptique du procédé de fabrication et de contrôle selon la présente invention, dans le cas d'un praticien, d'un prothésiste et d'une unité de fabrication délocalisée.

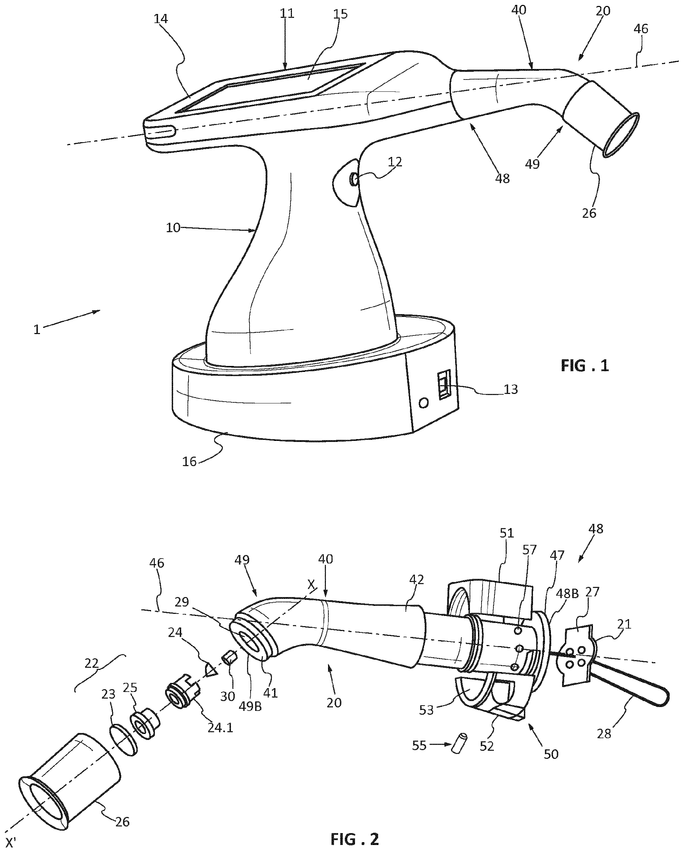

Sur la figure 1, on a représenté en 1 un appareil de mesure pour acquérir une image en couleur d'une dent ou des données spectrales d'une dent. Ces mesures permettent de réaliser une cartographie complète et précise des variations des différentes caractéristiques de la dent. En particulier, cette cartographie permet de déterminer la teinte dentaire en vue de la réalisation d'une prothèse dentaire selon le procédé de la présente invention.

Cet appareil comprend une poignée 10 préhensible surmontée d'un boîtier 11, une extrémité du boîtier 11 étant équipée d'une tête de mesure 20 permettant d'acquérir des données spectrales ou des images.

Selon une forme de réalisation, le boîtier 11 présente une forme sensiblement parallélépipédique avec une face supérieure 14 comprenant un afficheur 15 qui permet d'indiquer en temps réel les données relatives à la dent analysée provenant de la tête de mesure 20.

Ces données peuvent être ensuite transmises vers les moyens informatiques de l'utilisateur par connexion Wifi ou par le biais d'une connexion USB pour être traitées par un logiciel de calcul permettant de traiter les images. En l'occurrence, les données sont transmises sur un poste informatique accessible par le praticien ayant effectué ladite mesure afin de pouvoir intégrer ces données au dossier du client.

Selon une forme de réalisation particulièrement avantageuse, l'unité de calcul est intégrée directement dans le boîtier 11 qui permet d'afficher la carte de teintes de la dent analysée. Dans ce cas, les données traitées sont directement mémorisées sur le poste informatique du praticien.

On entend pour la suite de la description par poste informatique, soit un poste serveur en réseau, soit un poste isolé connecté au cloud du réseau Internet de façon à permettre un accès contrôlé et sécurisé desdites données par des tiers autorisés.

Selon une forme de réalisation, l'appareil comprend un socle 17 permettant de poser l'appareil sur une surface plane. Ce socle 17 comprend également une connexion filaire 13 de type USB pour le transfert des données. Par ailleurs, la poignée 10 comprend un logement dans lequel est reçue une batterie. Cette batterie peut être rechargée, lorsque l'appareil est posé sur son socle, via une connexion USB ou via un chargeur branché sur le secteur.

La poignée 10 préhensible comprend en outre un bouton d'activation 12 de la tête de mesure.

Selon une forme de réalisation illustrée sur les figures 1 à 4, la tête de mesure 20 comprend un corps creux 40 orienté selon un axe longitudinal 46. Ce corps creux comprend une extrémité proximale 48 montée sur le boîtier 11 et une extrémité distale coudée 49 munie d'un embout amovible 26 destiné à venir en contact avec une surface d'analyse d'une dent. Le corps creux 40 comprend également un passage 29 qui s'étend depuis l'extrémité proximale 48 jusqu'à l'extrémité distale 49. Le bout 48B de l'extrémité proximale 48 et le bout 49B de l'extrémité distale 49 sont ouverts.

La tête de mesure 20 comprend au moins une source lumineuse 21 et des moyens d'acquisition d'images, solidaires au corps creux 40.

Selon une forme préférée de réalisation de l'apareil, ladite au moins une source lumineuse est fixée sur le bout 48B de l'extrémité proximale 48 du corps 40 et les moyens d'acquisition d'images sont fixés sur le bout 49B de l'extrémité distale 49 du corps 40. Ce dernier permet de transmettre la lumière d'illumination de la source lumineuse 21 depuis l'extrémité proximale 48 du corps jusqu'à l'extrémité distale 49 du corps pour éclairer la surface d'analyse de la dent. L'appareil comprend en outre un câble 28 de transmission de données s'étendant dans le passage 29 du corps depuis l'extrémité proximale 48 du corps jusqu'à l'extrémité distale 49 pour transmettre au moins une image depuis l'extrémité distale jusqu'à l'extrémité proximale. Ce câble relie notamment les moyens d'acquisition à une unité de traitement de données.

Selon une forme de réalisation, le corps creux 40 est constitué d'un guide optique 41 permettant de guider la lumière d'illumination émise par la source lumineuse vers une surface de la dent, entouré par un surmoulage 42.

Selon une caractéristique importante, l'appareil comprend un ensemble d'orientation 50 permettant d'associer l'extrémité proximale 48 du corps creux 40 au boîtier 11 de façon à ce que la tête de mesure 20 occupe différentes positions angulaires par rapport au boîtier. Cet agencement spécifique permet de conférer à l'appareil un degré de liberté supplémentaire pour faciliter l'accès aux dents des deux arcades dentaires. En outre, le fait de pouvoir orienter la tête de mesure sans modifier la position et l'orientation de la poignée 10 par rapport à la surface d'analyse de la dent améliore l'utilisation de l'appareil pour l'utilisateur.

L'axe XX' de l'extrémité distale 49 du corps creux 40 est de préférence coudé selon un angle d'inclinaison α par rapport à l'axe longitudinal 46 porté par le corps 40 pour faciliter l'accès de la tête de mesure aux dents situées dans la partie arrière des deux arcades dentaires. Cet angle est compris entre 10 et 60°. Il est de préférence égal à 45°.

La coopération entre l'extrémité distale coudée 49 du corps creux 40 et les différentes positions angulaires permet de positionner l'embout 26 de sorte que l'axe longitudinal XX' de l'embout 26 est toujours perpendiculaire à la surface d'analyse de la dent.

L'ensemble d'orientation 50 comprend une première demi-coque 51 et une seconde demi-coque 52, les deux demi-coques étant assemblées pour former une coque creuse délimitant une cavité 53 autour de l'axe longitudinal 46. Les deux demi-coques 51, 52 sont maintenues assemblées par des moyens de fixation connus 61, 62. L'extrémité proximale 48 du corps creux 40 est reçue dans la cavité 53. Une des deux demi-coques 52 comprend une surface en saillie radialement 56 destinée à venir coopérer avec une pluralité de logements ayant une forme complémentaire, formés sur une surface extérieure de l'extrémité proximale 48 du corps creux 40 pour assurer les différentes positions angulaires de la tête de mesure 20 par rapport au boîtier 11.

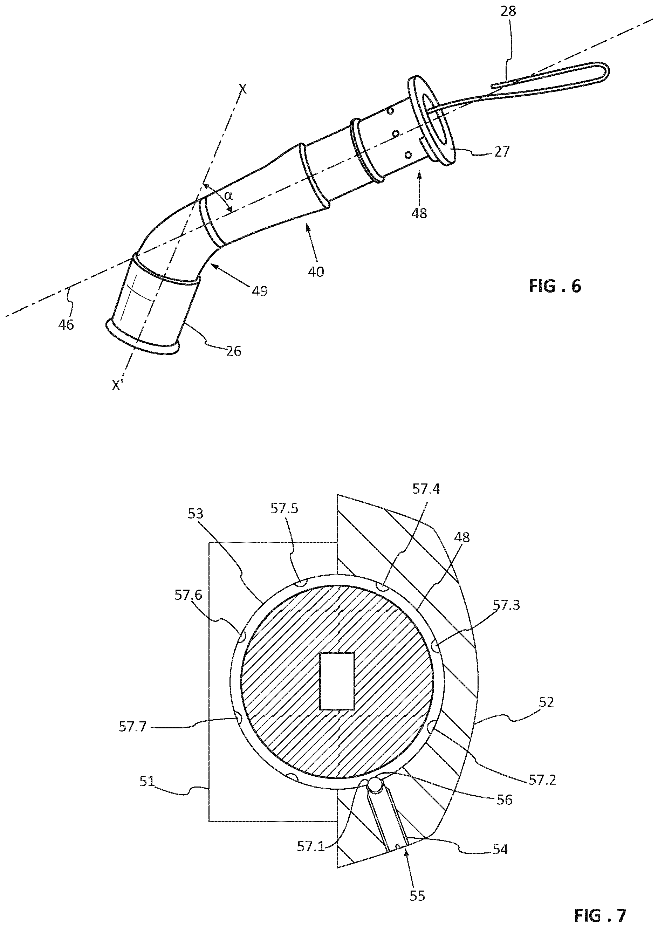

Comme l'illustre la figure 7, l'extrémité proximale 48 qui présente une section sensiblement circulaire est logée dans la cavité 53 formée par les deux demi-coques 51, 52. L'extrémité proximale 48 comporte sur sa surface extérieure une série de sept logements numérotés de 57.1 à 57.7. Les logements 57.1 à 57.7 sont positionnés de manière à placer la tête de mesure dans différentes positions angulaires comprises entre 0 et 270°. Les logements sont répartis de sorte que le pas angulaire entre deux positions est égal à 45°. Sur la figure 7, la tête de mesure 20 est orientée dans une position angulaire dans laquelle la surface en saille 56 est reçue dans le logement 57.1, correspondant par exemple à une position angulaire de référence égale à 0°. La tête de mesure 20 est ensuite orientée par rapport à cette position angulaire de référence.

La surface en saillie radiale, destinée à venir coopérer avec un des logements 57, est formée par une vis à bille 55 reçue dans un logement 54 réalisé dans la paroi de l'une des demi-coques 52 de l'ensemble d'orientation. Cette vis à bille 55 comprend à une extrémité orientée vers l'intérieur de la cavité 53, une bille qui forme la surface en saillie 56 ayant une forme complémentaire à celle des logements.

Pour placer la tête de mesure 20 dans une position angulaire définie, on fait réaliser au guide optique une rotation afin de placer la bille dans un des logements.

Avantageusement, la vis à bille 55 constitue également un moyen de verrouillage pour bloquer la tête de mesure dans la position angulaire choisie.

Selon une forme avantageuse, l'extrémité proximale 48 du corps est munie d'une butée qui permet de limiter l'orientation de la tête de mesure uniquement entre 0° correspondant à la position illustrée sur la figure 7 et 270°. Cette butée permet d'éviter à la tête de mesure d'effectuer des tours complets, empêchant ainsi au câble 28 de transmission de données de vriller.

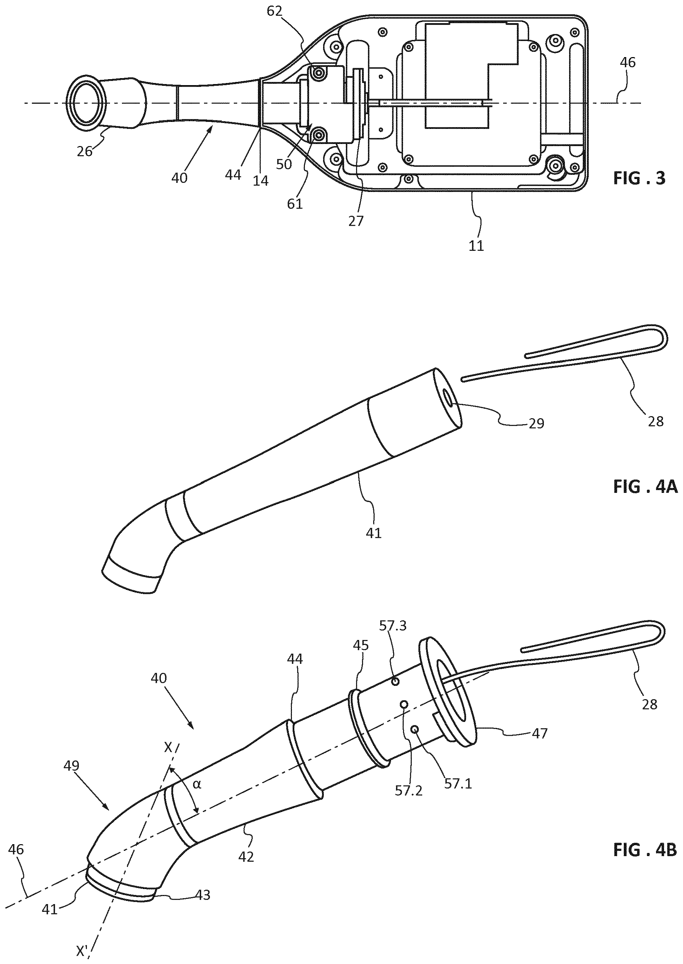

Selon une forme de réalisation particulièrement avantageuse et illustrée sur les figures 4A et 4B, le corps longitudinal creux 40 est constitué d'un guide optique 41 et d'un surmoulage 42 entourant le guide optique 41. De ce fait, le guide optique 41 et le surmoulage 42 comprennent une extrémité distale correspondant à l'extrémité distale 49 du corps creux 40 et une extrémité proximale correspondant à l'extrémité proximale 48 du corps creux 40.

Le guide optique 41 permet de guider la lumière de la source lumineuse 21 depuis l'extrémité proximale 48 jusqu'à l'extrémité distale 49 pour éclairer une surface d'analyse de la dent. En parallèle, le passage 29 qui s'étend depuis l'extrémité proximale 48 jusqu'à l'extrémité distale 49 du corps creux, permet de faire passer un câble 28 pour la transmission des données prises par les moyens d'acquisition vers une unité de traitement de données.

Le surmoulage 42 comprend un ensemble de motifs répartis le long de sa surface extérieure et configurés pour assurer d'une part la fixation de l'embout 26 sur le bout 49B de l'extrémité distale 49 du surmoulage 42 et d'autre part le montage de l'extrémité proximale 48 dans le boîtier 11 par l'intermédiaire de l'ensemble d'orientation 50.

Les motifs forment à une extrémité distale du surmoulage 42, un motif de clipsage 43. L'embout 26 comprend un motif de clipsage complémentaire 26A. Les deux motifs 43 et 26A coopèrent ensemble pour assurer la fixation de l'embout amovible 26 sur le guide optique. L'embout amovible 26, stérilisable et à usage limité dans le temps, peut ainsi être monté ou retiré très simplement sur le corps 40, manuellement.

Avantageusement, les motifs forment une première surépaisseur formant un premier épaulement annulaire 44 et une deuxième surépaisseur 45 formant un deuxième épaulement annulaire 45. La première surépaisseur 44 forme une butée contre laquelle vient en appui une extrémité 14 du boîtier 11. La deuxième surépaisseur 45 forme une butée de positionnement axiale pour le corps 40 lorsque l'extrémité proximale 48 est montée dans la cavité 53 formée par les deux demi-coques 51, 52.

Avantageusement, les motifs forment également une pluralité de logements 57.1-57.7 réalisés sur la surface extérieure du surmoulage 42, au niveau de l'extrémité proximale 48 du surmoulage 42. Ces logements sont destinés à venir coopérer avec la surface en saillie radialement sur la surface intérieure de la cavité 53 pour assurer les différentes positions angulaires de la tête de mesure 20 par rapport au boîtier 11.

Ainsi lorsque la tête de mesure est montée dans le boîtier 11 comme l'illustre la figure 3, une extrémité du boîtier 14 est en appui contre l'épaulement annulaire 44 du surmoulage 42. En outre, l'extrémité proximale 48 est maintenue en position dans la cavité 53 formée par les deux demi-coques qui sont fixées dans un logement du boîtier 11.

De préférence, le guide optique et le surmoulage 42 sont réalisés dans un matériau de réfraction plus faible que le matériau du guide optique afin de ne pas dégrader les conditions de guidage de la lumière. A titre d'exemple, le guide optique est en polyméthacrylate de méthyle (PMMA) et le surmoulage est en polytétrafuoroéthylène (PTFE).

De préférence, le guide optique 41 et le surmoulage 42 sont isolés de l'extérieur par un revêtement métallique afin d'assurer un bon guidage de la lumière d'illumination et l'isolation du guide de la lumière extérieure.

Les faces du guide peuvent être usinées pour générer des motifs destinés à optimiser l'éclairement en sortie du guide.

De manière connue, les moyens d'acquisition d'image comprennent un capteur 24 et un système optique 22.

Le capteur 24 est par exemple un capteur pourvu d'une matrice de pixels de manière à fournir un signal permettant de restituer une image de la dent ou une partie de la dent. Le capteur est de préférence un capteur à effet de champ. Le capteur est relié à une unité de traitement de données.

La source d'éclairement 21 est fixée sur un support de fixation 27. Le support de fixation 27 est apte à venir se positionner sur une surface d'assemblage 47 formée sur le bout 48B de l'extrémité proximale 48 du surmoulage 42.

De préférence, le support 27 comprend également une unité de traitement de données et une carte de commande de la source lumineuse. Cette carte peut aussi être déportée sur une autre carte électronique associée à l'électronique d'affichage.

De préférence, la source d'éclairement comprend au moins une diode électroluminescente LED blanche et des diodes électroluminescentes LEDs, dont les longueurs d'onde varient entre 448 et 630 nm, fixées sur le support de fixation 27.

Selon une forme avantageuse de l'invention, les LEDs, la carte de commande et le système optique sont solidaires du surmoulage 42. Grâce à cette configuration spécifique, le capteur voit toujours la même répartition pour une LED donnée. Ainsi, quelle que soit l'orientation du corps ou du guide optique 41, le faisceau d'éclairage sur la surface d'analyse de la dent est toujours le même.

L'utilisation d'un guide optique pour acheminer la lumière des LEDS vers une surface d'analyse permet une déportation des sources d'éclairement tout en fournissant un éclairement le plus homogène possible sur la surface d'analyse et ce quelle que soit la LED utilisée et l'orientation de la tête de mesure par rapport au boîtier.

Le système optique 22 comprend un objectif 25 et des filtres polarisants 23.

Le montage est réalisé en fixant le capteur 24 sur une pièce support 24.1 qui reçoit un verrou 30 d'immobilisation. L'objectif 25 est vissé sur la pièce support 24.1 au moyen d'un filetage très fin pour régler la distance focale de façon très précise.

La pièce support 24.1 avec son capteur et portant l'objectif 25 est introduit dans le guide optique 29 et solidarisé par tout moyen, notamment par collage.

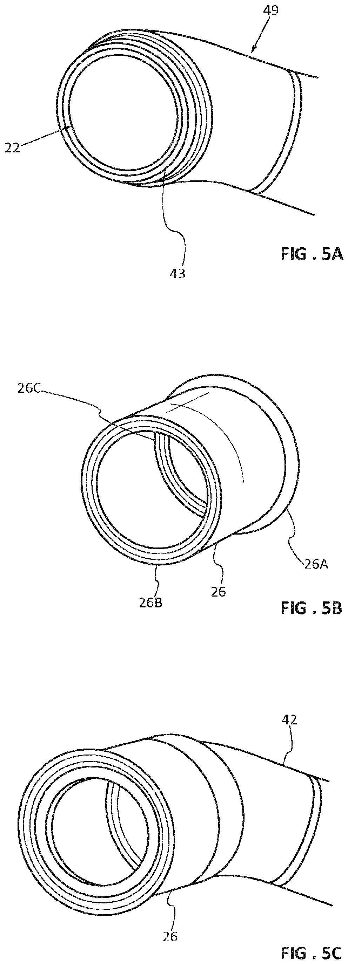

Selon une forme avantageuse illustrée sur la figure 5, le système optique 22 comprend des filtres polarisants 23 positionnés à proximité de l'extrémité distale 26A de l'embout 26. Ces filtres permettent d'éliminer la lumière réfléchie par la surface d'analyse.

Selon une forme de réalisation de l'appareil, une première lame de verre et une deuxième lame de verre maintiennent en sandwich un premier filtre polarisant 23 pour la partie émissive et un deuxième filtre 23 pour la partie réceptrice. Les deux lames et les deux filtres polarisants rectilignes, agencés de sorte que leurs axes de polarisation soient orthogonaux, forment un disque 23 ayant un diamètre de 16 mm.

Selon un mode de réalisation, ce disque 23 est rapporté par collage sur une lame de verre qui est clipsée sur l'extrémité du guide, ou selon une variante, le disque 23 est collé directement sur le bout 49B de l'extrémité distale 49 du surmoulage 42, comme l'illustre la figure 5A.

Sur la figure 5B, on a représenté plus en détail l'embout 26 qui présente une forme sensiblement tubulaire. Cet embout est réalisé dans un matériau ayant une couleur opaque. Cet embout est configuré pour venir se fixer sur le bout 49B de l'extrémité distale 49 du surmoulage 42. Cet embout 26 comprend une extrémité distale 26A destinée à venir en contact avec la dent et une extrémité proximale 26B positionnée à proximité des moyens d'acquisition d'image. Avantageusement, l'extrémité distale 26A est séparée de l'extrémité proximale 26B d'une distance prédéfinie correspondant à une distance de travail pour l'acquisition d'une image. Selon un autre avantage, l'utilisation de cet embout permet d'éliminer la lumière parasite au voisinage de la dent analysée. En outre, l'embout permet un positionnement précis de la tête de mesure.

L'extrémité proximale 26B de l'embout 26 présente sur sa surface intérieure un motif de clipsage 26C qui coopère avec un motif de clipsage 43 formé à l'extrémité distale 49 du surmoulage 42 pour fixer l'embout sur le corps. L'embout qui est à usage unique peut être ainsi monté ou retiré très simplement sur le corps creux manuellement.

De préférence, l'embout se présente sous la forme d'un capuchon jetable dont la forme tubulaire prolonge l'extrémité distale coudée 49 du surmoulage. De ce fait l'embout présente un angle d'inclinaison α par rapport à l'axe longitudinal 46 du corps 40 lorsqu'il est fixé sur ce dernier, voir figure 6.

Selon une autre caractéristique importante, cet embout comprend une surface de référence chromatique qui permet à l'appareil de mesure de réaliser une auto-calibration automatique.

Le praticien peut donc se munir du dispositif qui vient d'être décrit et bénéficie de données relatives à la dent avant de pratiquer la taille et/ou les soins et/ou la préparation.

Le traitement des données mesurées permet de déterminer par zones, par exemple trois zones, la couleur de la dent. Le fait de disposer d'une auto-calibration assure une comparaison à partir d'une même référence, quel que soit l'appareil utilisé. Le prothésiste sait alors quelles sont les zones et quelle couleur attribuer à chacune desdites zones, pour ne pas disposer d'une prothèse uniforme dont l'aspect esthétique serait critiquable.

De plus, le praticien peut aussi prendre une photo complémentaire permettant de numériser l'environnement de la ou des dents concernées par la pose d'une prothèse. A cet effet, une application peut être développée en corrélation avec le logiciel de traitement des données et des informations clients pour introduire ces photos complémentaires. De façon avantageuse, l'intégration des photos dans un fichier et l'adjonction aux données transmises seront effectuées automatiquement afin que le praticien n'ait pas à s'en préoccuper, le praticien n'ayant qu'à ouvrir le dossier du patient.

Il est en effet important de fournir au prothésiste en plus de la teinte, de la brillance, de la translucidité des paramètres comme une photo couleur de la dent quand cela est possible, des photos de contexte à savoir, une photo du visage, du sourire et des photos avec des écarteurs plus ou moins proches de la dent de référence ou encore le type de moignon et la couleur du moignon utilisée.

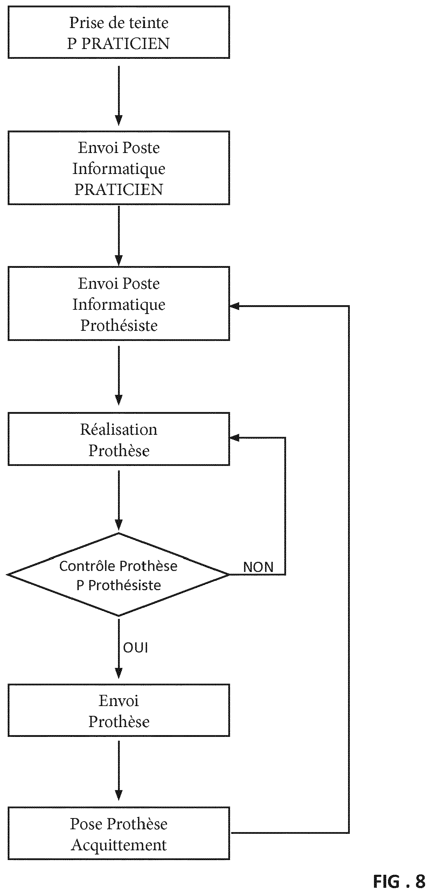

Le procédé selon l'invention consiste, comme schématisé sur le synoptique de la figure 8, à suivre la succession des étapes suivantes :
a) prise de teinte de la dent du client destinée à être remplacée ou restaurée par le praticien à l'aide d'un dispositif de prise de teinte et appartenant au praticien, dit DPraticien avec mémorisation locale de ces données,
b) transmission de ces données vers un poste informatique du praticien équipé d'un logiciel de visualisation des données mesurées et éventuellement d'un logiciel de saisie des coordonnées et spécificités du client, les deux logiciels étant avantageusement combinés,
c) transmission de ces données à un poste informatique d'un prothésiste déterminé,
d) fabrication de la prothèse selon les données reçues du praticien,
e) contrôle des données de la prothèse fabriquée par le prothésiste à l'aide d'un dispositif de prise de teinte identique à celui appartenant audit prothésiste, dit DProthésiste, auto calibré de la même façon que le dispositif DPraticien du praticien,
f) envoi de la prothèse conforme par le prothésiste au praticien.

Selon l'invention, les dispositifs DProthésiste et DPraticien pour la prise de teinte et pour le contrôle de ladite teinte comprennent un boîtier, une poignée et une tête de mesure, munie d'un embout destiné à venir en contact avec une surface d'analyse d'une dent, au moins une source lumineuse et des moyens d'acquisition d'images, un ensemble d'orientation permettant à la tête de mesure d'occuper différentes positions angulaires par rapport au boîtier ; ainsi qu'une unité de traitement des données, le traitement des données permettant de déterminer, par zones, la couleur de la dent pour réaliser une cartographie des variations des différentes caractéristiques de la dent ; l'embout de chacun des dispositifs DProthésiste et DPraticien comprenant une même surface de référence chromatique qui permet au dispositif de réaliser une autocalibration automatique.

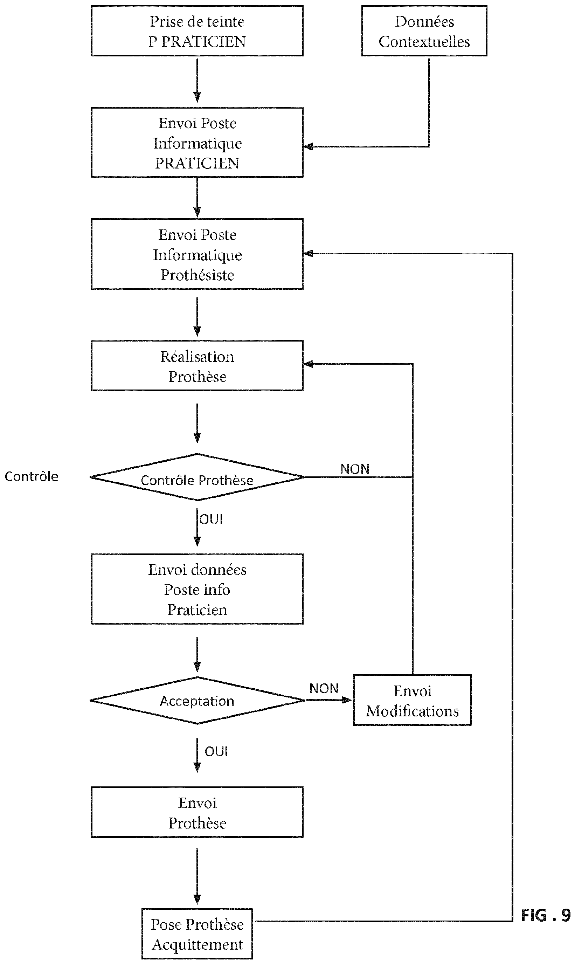

Le procédé prévoit une étape supplémentaire qui consiste à transmettre, du prothésiste au praticien cette fois, les données de la prothèse fabriquée, mesurées avec ledit DProthésiste, préalablement à l'envoi de ladite prothèse, l'envoi n'intervenant que si le praticien donne sa confirmation. Le procédé devient :
a)prise de teinte de la dent du client destinée à être remplacée ou restaurée par le praticien, à l'aide du DPraticien,
b) transmission de ces données vers le poste informatique du praticien,
c) transmission de ces données du poste informatique du praticien au poste informatique du prothésiste déterminé,
d) fabrication de la prothèse selon les données reçues du praticien,
e) contrôle des données de la prothèse fabriquée à l'aide du DProthésiste,
f) transmission au praticien des données de la prothèse fabriquée pour aval par le praticien, et
g) envoi de la prothèse conforme par le prothésiste au praticien après accord dudit praticien.
L'invention permet aussi au praticien de transmettre des modifications avant de donner son aval pour l'envoi de la prothèse, voir figure 9. Dans ce cas, le synoptique devient le suivant :
a) prise de teinte de la dent du client destinée à être remplacée ou restaurée, par le praticien à l'aide du DPraticien,
b) transmission de ces données vers le poste informatique du praticien,
c) transmission de ces données du poste informatique du praticien au poste informatique du prothésiste,
d)fabrication de la prothèse selon les données reçues du praticien,
e) contrôle des données de la prothèse fabriquée à l'aide du DProthésiste,
f) transmission au praticien des données de la prothèse fabriquée pour aval par le praticien,
g) transmission par le praticien de données de modifications,
h modifications de la prothèse par le prothésiste selon ces données de modifications,
i) contrôle des données de la prothèse modifiée à l'aide du DProthésiste,
j) transmission des données de la prothèse modifiée par le prothésiste au praticien pour aval par le praticien, et
k) envoi de la prothèse conforme par le prothésiste au praticien après accord du praticien.

Le dispositif de prise de teinte de la dent pour toutes les étapes du procédé, tant le DPraticien que le DProthésiste est avantageusement le dispositif qui a été décrit ci-avant dans la présente invention et qui comprend une tête orientable, ce qui permet une prise de teinte beaucoup plus précise par orientation de la tête dudit dispositif sur ladite dent puis par mesure des paramètres de ladite dent.

Le procédé prévoit aussi que, malgré la qualité des échanges de données réalisés, le praticien apporte des rectificatifs, qui peuvent être liés à son savoir-faire, à la prothèse fabriquée dont les données ont été transmises. Dès lors, le prothésiste peut apporter des modifications avant nouvelle soumission des données de la prothèse modifiée et envoi de la prothèse finalisée après confirmation par le praticien de la conformité.

Le procédé selon l'invention permet de résoudre la problématique soulevée à savoir le contrôle qualité de la prothèse avant envoi par le prothésiste au praticien, sur la base de paramètres mesurés identiques aux paramètres mesurés par le praticien.

Dans tous les cas, une fois la prothèse en place, le praticien revient sur le logiciel de gestion pour acquitter la pose et la conformité, le prothésiste étant informé de cette pose.

Le praticien peut aussi adjoindre des commentaires, si nécessaire, pour assurer un retour précis au prothésiste concerné ou pour faire un commentaire sur un forum dédié, communautaire.

Il est aussi possible d'utiliser la technologie du "cloud" pour le transfert des données qui représentent des fichiers lourds, ce qui n'est autre qu'un serveur virtuel. Ce type de communication et de serveurs ou poste informatiques virtuels sont donc parfaitement inclus dans le procédé selon l'invention.

Le procédé permet aussi de compléter à tout moment les données relatives à la dent ou aux dents concernées, par des données du contexte dentaire périphérique à celui de la dent ou des dents concernées. De telles données contextuelles peuvent être des photos numériques comme indiqué ci-avant, des données relatives à la matière à utiliser voire à la marque commerciale de la poudre céramique etc.

## Revendications

1. Procédé de réalisation et de contrôle de conformité d'une prothèse dentaire à partir d'une prise de paramètres en bouche avec un dispositif de prise de teinte (1), le procédé comprenant les étapes suivantes :
a) prise de teinte de la dent du client destinée à être remplacée ou restaurée par le praticien à l'aide du dispositif de prise de teinte (1) appartenant au praticien, dit DPraticien, avec mémorisation locale de ces données,
b) transmission de ces données vers un poste informatique du praticien équipé d'un logiciel de visualisation des données mesurées et éventuellement d'un logiciel de saisie des coordonnées et spécificités du client, les deux logiciels étant avantageusement combinés,
c) transmission de ces données à un poste informatique d'un prothésiste déterminé,
d) fabrication de la prothèse selon les données reçues du praticien,
e) contrôle des données de la prothèse fabriquée par le prothésiste à l'aide d'un dispositif de prise de teinte (1) identique à celui appartenant audit prothésiste, dit DProthésiste, auto calibré de la même façon que le dispositif DPraticien du praticien,
f) envoi de la prothèse conforme par le prothésiste au praticien ;
dans lequel les dispositifs DProthésiste et DPraticien (1) pour la prise de teinte et pour le contrôle de ladite teinte comprennent un boîtier (11), une poignée (10) et une tête de mesure (20), munie d'un embout (26) destiné à venir en contact avec une surface d'analyse d'une dent, au moins une source lumineuse (21) et des moyens d'acquisition d'images (22, 24), un ensemble d'orientation (50) permettant à la tête de mesure (20) d'occuper différentes positions angulaires par rapport au boîtier (11) ; ainsi qu'une unité de traitement des données, le traitement des données permettant de déterminer, par zones, la couleur de la dent pour réaliser une cartographie des variations des différentes caractéristiques de la dent; **caractérisé en ce que** l'embout (26) de chacun des dispositifs DProthésiste et DPraticien (1) comprend une même surface de référence chromatique qui permet au dispositif (1) de réaliser une autocalibration automatique.

2. Procédé de réalisation et de contrôle de conformité d'une prothèse dentaire selon la revendication 1, **caractérisé en ce qu'**il comprend en plus des étapes a) à e) les étapes suivantes :
e1) transmission au praticien des données de la prothèse fabriquée et contrôlée pour aval au praticien,
f1) envoi de la prothèse conforme par le prothésiste au praticien après accord dudit praticien.

3. Procédé de réalisation et de contrôle de conformité d'une prothèse dentaire selon la revendication 2, **caractérisé en ce qu'**il comprend, entre les étapes e1) et f1), les étapes supplémentaires suivantes :
e2) transmission par le praticien de données de modifications,
e3) modifications de la prothèse par le prothésiste selon ces données de modifications,
e4) contrôle des données de la prothèse modifiée à l'aide du DProthésiste (1),
e5) transmission des données de la prothèse modifiée par le prothésiste au praticien pour aval par le praticien.

4. Procédé de réalisation et de contrôle de conformité d'une prothèse dentaire selon l'une quelconque des revendications précédentes, **caractérisé en ce que** les données transmises incluent des données contextuelles à savoir : une photo du visage et/ou du sourire et des photos avec des écarteurs plus ou moins proches de la dent de référence ou encore le type de moignon et/ou la couleur du moignon utilisée.

## Patentansprüche

1. Verfahren zur Herstellung und zur Konformitätskontrolle einer Zahnprothese anhand einer Aufnahme von Parametern im Mund mit einer Farbtonabnahmevorrichtung (1), wobei das Verfahren die folgenden Schritte umfasst:
a) Farbtonabnahme des zu ersetzenden oder wiederherzustellenden Zahns des Patienten durch den Praktiker mithilfe der dem Praktiker gehörenden Farbtonabnahmevorrichtung (1), der sogenannten DPraktiker, mit lokaler Speicherung der Daten,
b) Übertragung der Daten zu einem Computerarbeitsplatz des Praktikers, der mit einem Programm zur Visualisierung der aufgenommenen Daten und gegebenenfalls mit einem Programm zu Aufnahme der persönlichen Daten und Besonderheiten des Patienten ausgestattet ist, wobei die beiden Programme vorteilhafterweise zusammenwirken,
c)Übertragung dieser Daten zum Computerarbeitsplatz eines bestimmten Zahntechnikers,
d) Herstellung der Prothese anhand der vom Praktiker empfangenen Daten
e) Überprüfung der Daten der durch den Zahntechniker hergestellten Prothese anhand einer mit jener identischen, dem Zahntechniker gehörenden Farbtonabnahmevorrichtung (1), der sogenannten DTechniker, die auf die gleiche Weise kalibriert ist, wie die Vorrichtung DPraktiker des Praktikers,
f) Versenden der konformen Prothese durch den Zahntechniker an den Praktiker;
wobei die Vorrichtungen DTechniker und DPraktiker (1) für die Farbtonabnahme und für die Überprüfung des Farbtons ein Gehäuse (11), einen Handgriff (10) und einen Messkopf (20) aufweisen, der mit einem Ansatz (26) versehen ist, der dazu bestimmt ist, mit einer zu analysierenden Oberfläche eines Zahns in Kontakt zu kommen, und wenigstens eine Lichtquelle (21) und Bildaufnahmemittel (22, 24) und eine Ausrichteinheit (50) aufweist, die dem Messkopf (20) gestattet, verschiedene Winkelpositionen in Bezug auf das Gehäuse (11) einzunehmen, sowie eine Datenverarbeitungseinheit aufweist, wobei die Datenverarbeitung gestattet, die Farbe des Zahns bereichsweise zu bestimmen, um eine Kartografie der Änderung der verschiedenen Eigenschaften des Zahns zu erstellen, **dadurch gekennzeichnet, dass** der Ansatz (26) der Vorrichtungen DTechniker und DPraktiker (1) jeweils die gleiche chromatische Bezugsfläche aufweisen, die der Vorrichtung (1) ermöglicht, eine automatische Autokalibrierung durchzuführen.

2. Verfahren zur Herstellung und zur Konformitätskontrolle einer Zahnprothese nach Anspruch 1, **dadurch gekennzeichnet, dass** dieses zusätzlich zu den Verfahrensschritten a) bis e) die folgenden Verfahrensschritte umfasst:
e1) Übertragung von Daten der hergestellten und
kontrollierten Prothese an den Praktiker zur Nacharbeit,
f1) Versenden der konformen Prothese durch den Zahntechniker an den Praktiker nach Einverständniserklärung durch den Praktiker.

3. Verfahren zur Herstellung und zur Konformitätskontrolle einer Zahnprothese nach Anspruch 2, **dadurch gekennzeichnet, dass** diese zwischen den Verfahrensschritten e1) und f1) die folgenden ergänzenden Verfahrensschritte umfasst:
e2) Übertragung von Modifikationsdaten durch den Praktiker
e3) Modifikation der Prothese durch den Zahntechniker gemäß den Modifikationsdaten,
e4) Kontrolle der Daten der modifizierten Prothese mittels der DTechniker (1)
e5) Übertragung der Daten der modifizierten Prothese durch den Zahntechniker an den Praktiker zur Nacharbeit durch den Praktiker.

4. Verfahren zur Herstellung und zur Konformitätskontrolle einer Zahnprothese nach einem der vorhergehenden Ansprüche, **dadurch gekennzeichnet, dass** die übertragenen Daten Kontextdaten einschließen, nämlich: ein Foto des Gesichts und/oder des Lächelns und Fotos mit Abstandshaltern, die sich mehr oder weniger in der Nähe des Bezugszahns befinden oder noch der Typ des Stumpfes und/oder die Farbe des verwendeten Stumpfes.

## Claims

1. A method for manufacturing and testing the conformity of a dental prosthesis from a capturing of parameters in the mouth with a colour-capturing device (1), the method comprising the following steps:
a) capturing the colour of the tooth of the patient intended to be replaced or restored by the practitioner using a colour-capturing device (1) belonging to the practitioner, referred to as DPractitioner, with local storage of these data,
b) transmission of these data to a computer station of the practitioner equipped with software for displaying the data measured and optionally software for entering the personal details and specificities of the patient, the two sets of software advantageously being combined,
c) transmission of these data to a computer station of a given prosthetist,
d) manufacture of the prosthesis in accordance with the data received from the practitioner,
e) testing of the data of the prosthesis manufactured by the prosthetist using a colour-capturing device (1) identical to the one belonging to said dental technician, referred to as DProsthetist, self-calibrated in the same way as the DPractitioner device of the practitioner,
f) sending of the conforming prosthesis by the prosthetist to the practitioner;
wherein the DProsthesist and DPractitioner devices (1) for capturing colour and for testing said colour comprise a housing (11), a handle (10) and a measuring head (20), provided with an end piece (26) intended to come into contact with an analysis surface of a tooth, at least one light source (21) and image acquisition means (22, 24), an orientation assembly (50) enabling the measuring head (20) to occupy various angular positions with respect to the housing (11), as well as a data processing unit, the processing of the data making it possible to determine, by zones, the colour of the tooth in order to produce mapping of the variations of the various characteristics of the tooth; **characterised in that** the end piece (26) of each of the DProsthesist and DPractitioner devices (1) comprises the same chromatic reference surface that enables the device (1) to carry out automatic self-calibration.

2. Method for manufacturing and testing the conformity of a dental prosthesis according to claim 1, **characterised in that** it comprises, in addition to steps a) to e), the following steps:
e1) transmission to the practitioner of the data of the prosthesis manufactured and checked for approval to the practitioner,
f1) sending of the conforming prosthesis by the prosthetist to the practitioner after agreement of said practitioner.

3. Method for manufacturing and testing conformity of a dental prosthesis according to claim 2, **characterised in that** it comprises, between steps e1) and f1), the following additional steps:
e2) transmission by the practitioner of modification data,
e3) modifications to the prosthesis by the prosthetist according to these modification data,
e4) testing of the data of the modified prosthesis using DProsthetist (1),
e5) transmission of the data of the modified prosthesis by the prosthetist to the practitioner for approval by the practitioner.

4. Method for manufacturing and testing conformity of a dental prosthesis according to any one of the preceding claims, **characterised in that** the data transmitted include contextual data, namely: a photograph of the face and/or smile and photographs with retractors more or less close to the reference tooth or the type of stump and/or the colour of the stump used.
